## Europäisches Patentamt
## European Patent Office
## Office européen des brevets

(11) Veröffentlichungsnummer: **0 340 569**
**A1**

# EUROPÄISCHE PATENTANMELDUNG

(21) Anmeldenummer: **89107243.1**

(22) Anmeldetag: **21.04.89**

(51) Int. Cl.⁴: **B23H 7/28**

(30) Priorität: **30.04.88 DE 3814675**

(43) Veröffentlichungstag der Anmeldung:
**08.11.89 Patentblatt 89/45**

(84) Benannte Vertragsstaaten:
**AT BE CH DE ES FR GB IT LI LU NL SE**

(71) Anmelder: **König, Wilfried, Prof.-Dr.-Ing. Dr. h.c.**
**Welkenrather Strasse 78**
**D-5100 Aachen(DE)**

(72) Erfinder: **Behmer, Udo, Dr.-Ing.**
**Höhenweg 51**
**D-5100 Aachen(DE)**

(74) Vertreter: **Patentanwälte Dipl.-Ing. Alex Stenger Dipl.-Ing. Wolfram Watzke Dipl.-Ing. Heinz J. Ring**
**Kaiser-Friedrich-Ring 70**
**D-4000 Düsseldorf 11(DE)**

(54) **Bearbeitungsverfahren zum Planetärerodieren.**

(57) Bei einem Bearbeitungsverfahren zum Planetärerodieren vorhandener Einsenkungen (2), bei dem für eine Schlichtbearbeitung eine relative zyklische laterale Translationsbewegung (T) zwischen Werkzeugelektrode (3) und Werkstück (1) ausgeführt wird, wobei unter Vorgabe einer endgültigen Sollwertbahn (5) die Istbewegung (6) durch Regelung der Spaltweite über dem Auslenkradius erfolgt, soll für das kontinuierliche Aufweiten ein günstigeres Prozeßverhalten und eine verkürzte Bearbeitungszeit ermöglicht werden. Hierzu ist vorgesehen, daß die Sollwertbahnvorgabe für jeden Planetärumlauf unter Ermittlung der Istbewegung mindestens eines vorangegangenen Planetärumlaufs und unter Vorgabe einer einen optimalen Prozeßablauf ergebenden Sollistwert-Differenz bestimmt wird, wobei jede Sollwertbahnvorgabe durch die endgültige Sollwertbahn begrenzt ist.

Fig.1

EP 0 340 569 A1

## Bearbeitungsverfahren zum Planetärerodieren

Die Erfindung betrifft ein Bearbeitungsverfahren zum Planetärerodieren vorhandener Einsenkungen, bei dem für eine Schlichtbearbeitung eine relative zyklische laterale Translationsbewegung zwischen Werkzeugelektrode und Werkstück ausgeführt wird, wobei unter Vorgabe einer endgültigen Sollwertbahn die Istbewegung durch Regelung der Spaltweite über den Auslenkradius erfolgt.

Erodierverfahren sind abtragende Bearbeitungsverfahren, bei denen durch elektrische Entladungsvorgänge zwischen einer Werkzeugelektrode und einem elektrisch leitenden Werkstück unter einem Arbeitsmedium Abtragungen zum Zwecke der Bearbeitung hervorgerufen werden. Bei einem gattungsgemäßen Verfahren erfolgt das Abtragen durch aufeinanderfolgende, zeitlich voneinander getrennte nichtstationäre oder quasistationäre elektrische Entladungen.

Beim Planetärerodieren sind der vom Senkerodieren her bekannten geradlinigen Bewegung räumliche Translationsbewegungen zwischen Werkzeugelektrode und Werkstück überlagert (vgl. "Industrie-Anzeiger", Sondernummer April 1981, Seite 109). Die räumliche Translationsbewegung beim Planetärerodieren bewirkt verbesserte Arbeitsbedingungen und Arbeitsergebnisse. Vorteilhaft ist insbesondere die Möglichkeit des Schruppens und Schlichtens mit ein- und derselben Werkzeugelektrode. Das Schlichten erfolgt nämlich gegenüber dem Schruppen mit geringerer Entladeenergie, so daß die Spaltweite zwischen Werkzeugelektrode und Werkstück verringert werden muß. Dies ist beim Senkerodieren nur durch Austausch der Werkzeugelektrode möglich und kann beim Planetärerodieren durch die Translationsbewegung erreicht werden. Außerdem werden durch die zusätzliche Translationsbewegung die Spülbedingungen im Arbeitsmedium verbessert, so daß störende Fehlentladungen durch abgetragenes Material zwischen Werkzeugelektrode und Werkstück vermieden werden können. Darüber hinaus kann die Spaltweite zwischen Werkzeugelektrode und Werkstück zur Vermeidung von Fehlentladungen schnell ausgeregelt werden, weil die Elektrode auch lateral zurückgezogen werden kann. Die laterale Translationsbewegung wirkt sich außerdem günstig auf die Verschleißverteilung der Werkzeugelektrode aus (vgl. "IndustrieAnzeiger", aaO, Seite 109 ff).

Die Bewegungen beim Planetärerodieren bedingen aber auch besondere Probleme, die insbesondere bei Werkzeugelektroden mit Ecken und Kanten auftreten. Hierbei ist vor allem die sogenannte Auslenkstrategie zu berücksichtigen, nach der die Bewegungen zwischen Werkzeugelektrode und Werkstück bis zum Erreichen der vorgegebenen Maximalgeometrie ausgeführt werden.

Bei den bekannten Verfahren werden vornehmlich kreisförmige Translationsbewegungen ausgeführt. Hierzu gehören das sogenannte Ausschälen und das sogenannte schrittweise Aufweiten, bei denen nach einer radialen Translationsbewegung bzw. einem radialen Translationsschritt kreisförmige Translationsbewegungen ausgeführt werden. Ferner gehört hierzu, das sogenannte kontinuierliche Aufweiten, bei dem eine spiralförmige Translationsbewegung ausgeführt wird (vgl. "Blech Rohre Profile" 27 (1980) 9, Seite 539 bis 544).

Beim schrittweisen Aufweiten wird durch die für jeden Planetärumlauf konstante Vergrößerung des Radius und die anschließende Translationsbewegung auf einer exakten Kreisbahn bei jedem Planetärumlauf ein definiertes Werkstückvolumen abgetragen. Der Planetärbewegung ist eine Regelung der Spaltweite des Erosionsspaltes überlagert, damit hauptsächlich die bei mittleren Spaltweiten auftretenden Normalentladungen erfolgen und weder die durch große Spaltweiten bedingten Leerlaufimpulse, noch die durch kleine Spaltweiten bedingten Fehlentladungen hervorgerufen werden. Die Regelung erfolgt bei dieser Auslenkstrategie im wesentlichen über die Geschwindigkeit der Translationsbewegung. Außerdem können sich bei bestimmten Geometrien der Werkzeugelektroden erheblich schwankende Größenunterschiede der Eingriffsflächen ergeben, die das Prozeßverhalten erheblich beeinflussen. Zum Beispiel tritt bei einem eckigen Elektrodenquerschnitt ein ständiger Wechsel zwischen Flächen- und Linieneingriff auf, wobei das Werkstückvolumen an den Flächen viel langsamer abgetragen wird als in den Eckenbereichen.

Beim kontinuierlichen Aufweiten dagegen wird die Werkzeugelektrode in bezug auf das Werkstück entsprechend der jeweiligen Spaltweite des Erosionsspaltes soweit wie möglich nach außen gezwungen und gleichzeitig mit annähernd konstanter Winkelgeschwindigkeit an der zu erodierenden Fläche vorbeibewegt. Die Regelung der Spaltweite des Erosionsspaltes erfolgt dabei über die Veränderung des aktuellen Auslenkradius. Hiermit kann auch eine Bewegung in der Haupteinsenkrichtung verknüpft sein, wodurch sich jedes Volumenelement der Werkzeugelektrode in bezug auf das Werkstück aud einer Kegelmantelfläche bewegt.

Die Istbewegung der Werkzeugelektrode bezogen auf das Werkstück in der Ebene senkrecht zur Haupteinsenkrichtung nähert sich im Laufe der Bearbeitung aufgrund der abzutragenden Volumenverhältnisse an den Ecken und Flächen der Einsenkung der Querschnittsform der Werkzeugelektrode an. Hierbei treten gegen Ende der Bearbeitung vornehmlich an den Ecken größere Leerlaufbereiche auf, in denen die Werkzeugelektrode den maximalen Aufweitungsbetrag erreicht hat. Es sind Verfahren bekannt geworden, die zur Vermeidung bzw. Reduzierung von Wirkungsgradverlusten die Geschwindigkeit der Translationsbewegung in Abhängigkeit vom Prozeßzustand steuern, wobei die Leerlaufbereiche mit erhöhter Geschwindigkeit überstrichen werden (vgl. "Industrie-Anzeiger", aaO. Seite 112 ff). Jedoch ergeben sich bei diesem Verfahren im Laufe der Bearbeitung große Unterschiede zwischen der Geometrie der endgültigen Sollwertbahn und der geometrisch verzerrten Istbewegung, wobei diese Differenzen über einen Planetärumlauf in Abhängigkeit von der Geometrie der Werkzeugelektrode stark schwanken können. Hierdurch kann das Spaltweitenregelungssystem überfordert werden, so daß vermehrt Fehlentladungen auftreten, welche einen erhöhten Verschleiß der Werkzeugelektrode zur Folge haben. Dies kann eine Einstellung des Spaltweitenregelungssystems erforderlich machen, die sich an den kritischen Prozeßbereichen orientiert und mit der Wirkungsgradverluste an den weniger kritischen Prozeßbereichen einhergehen.

Davon ausgehend liegt der Erfindung die **Aufgabe** zugrunde, ein verbessertes Bearbeitungsverfahren zum Planetärerodieren für das kontinuierliche Aufweiten zu schaffen, das insbesondere ein günstigeres Prozeßverhalten und eine kürzere Bearbeitungszeit ermöglicht.

Diese Aufgabe wird erfindungsgemäß dadurch gelöst, daß die Sollwertbahnvorgabe für jeden Planetärumlauf unter Ermittlung der Istbewegung mindestens eines vorangegangenen Planetärumlaufs und unter Vorgabe einer einen optimalen Prozeßablauf ergebenden Soll-Istwert-Differenz bestimmt wird, wobei jede Sollwertbahnvorgabe durch die endgültige Sollwertbahn begrenzt ist.

Bei einem erfindungsgemäßen Bearbeitungsverfahren wird also bei jedem Planetärumlauf die Istbewegung mindestens eines vorangegangenen Planetärumlaufs bei der Sollwertbahnvorgabe berücksichtigt, so daß größere Schwankungen der Differenzen zwischen Sollwertbahnvorgabe und Istbewegung über einen Planetärumlauf vermieden werden können. Die Sollwertbahnvorgabe für jeden Planetärumlauf erfolgt nämlich durch Vorgabe einer einen optimalen Prozeßablauf ergebenden Soll-Istwert-Differenz, mit der beispielsweise den zu erwartenden Eingriffsverhältnissen der Werkzeugelektrode oder der Translationsgeschwindigkeit Rechnung getragen werden kann. Die optimale Soll-Istwert-Differenz ist jedoch nur insoweit für die Sollwertbahnvorgabe bestimmend, als die endgültige Sollwertbahn nicht überschritten wird. Soweit dies für einen Planetärumlauf an einzelnen Stellen oder bereichsweise der Fall ist, deckt sich die Sollwertbahnvorgabe mit der endgültigen Sollwertbahn.

Die Istbewegung der Werkzeugelektrode kann beispielsweise bei einem Probelauf ermittelt und jedem weiteren Bearbeitungsvorgang zugrundegelegt werden. Dies hat jedoch den Nachteil, daß bei der Sollwertbahnvorgabe Störungen des Bearbeitungsverlaufes im Einzelfall nicht Rechnung getragen wird.l Vorzugsweise wird deshalb die Istbewegung während jedes Bearbeitungsvorganges ermittelt.

Ein erfindungsgemäßes Bearbeitungsverfahren hat insbesondere den Vorteil, daß eine annähernd gleichbleibende Differenz zwischen der Sollwertbahnvorgabe und der Istbewegung der Werkzeugelektrode gewährleistet werden kann, wodurch das Spaltweitenregelungssystem entlastet wird und insbesondere auch in den Übergangsbereichen von Ecken und Flächen der Einsenkung Fehlentladungen vermieden werden können. Mit dem günstigen Prozeßverhalten des Verfahrens geht eine kürzere Bearbeitungs - zeit und ein geringerer Verschleiß der Werkzeugelektrode einher, weil über den gesamten Planetärumlauf vornehmlich abtragintensive Normalentladungen auftreten.

Bei einer Ausgestaltung des Verfahrens werden die Radien der Istbewegung in vorgewählten Winkelschritten um ein Planetärzentrum ermittelt, wodurch z.B. die Bearbeitung der Daten der Istbewegung erleichtert wird, weil für jeden Radius nur ein Datum abgespeichert und verarbeitet werden muß.

Hierbei kann jeder ermittelte Radius der Istbewegung für die Sollwertbahnvorgabe eines nachfolgenden Planetärumlaufs um eine Soll-Istwert-Differenz vergrößert werden, die abhängig von der zu erwartenden Abtragrate vorgegeben wird, bis ein in der endgültigen Sollwertbahn endender maximaler Radius erreicht wird. Die zu erwartende Abtragrate hängt beispielsweise von den Impulsparametern der elektrischen Endladungsvorgänge ab. Vorzugsweise wird hierbei sichergestellt, daß jeder Radius der Sollwertbahnvorgabe mindestens so groß ist, wie der Radius der Sollwertbahnvorgabe des vorangegangenen Planetärumlaufs unter dem gleichen Planetärwinkel, so daß die Auswirkungen einen Rückzug der Werkzeugelektrode in Richtung des Planetärzentrums bewirkender kurzfristiger Prozeßstörungen auf die Sollwertbahnvorgabe gemindert werden.

Bei einer weiteren Ausgestaltung erfolgt eine Änderung der Sollwertbahnvorgabe gegenüber dem vorangegangenen Planetärumlauf nicht, wenn die Summe der unter bestimmten Planetärwinkeln ermittelten Abweichungen zwischen der Sollwertbahnvorgabe und der Istbewegung für einen Planetärumlauf einen vorgegebenen Grenzwert überschreitet, wobei für diesen Fall die gleiche Sollwertbahnvorgabe ohne Vergrößerung der Radien für den nachfolgenden Planetärumlauf gilt. Die Sollwertbahnvorgabe wird also für einen nachfolgenden Planetärumlauf wiederholt, wenn größere Abweichungen zwischen der Istbewegung des vorherigen Planetärumlaufes und der zugehörigen Sollwertbahnvorgabe bestehen. Hierdurch wird eine weitgehende Angleichung der Istbewegung an die zugrundeliegende Sollwertbahnvorgabe und eine weitere Prozeßstabilisierung erreicht.

Bei einer weiteren Ausgestaltung wird die ermittelte Istbewegung eines Planetärumlaufs durch Geradenstücke ersetzt und werden zur Sollwertbahnvorgabe Sollwertbahngeradenstücke durch Verschiebung der Geradenstücke bestimmt. Die Geradenstücke können beispielsweise Regressionsgeraden sein, welche mehr als zwei ermittelte Punkte der Istbewegung ersetzen. Je nach der zu erwartenden Abtragsrate werden die Sollwertbahngeradenstücke gegenüber den Geradenstücken vom Planetärzentrum weg verschoben. Durch die Bestimmung von Sollwertbahngeradenstücken wird eine weitere Prozeßstabilisierung erreicht, da auf zufälligen Prozeßstörungen beruhende Unregelmäßigkeiten der Istbewegung vorangegangener Planetärumläufe ausgemittelt werden.

Zur Sollwertbahnvorgabe werden vorzugsweise die Radien der Schnittpunkte der Geradenstücke unter Beibehaltung des jeweiligen Planetärwinkels um ein vorgegebenes Maß vergrößert und werden durch die Endpunkte der vergrößerten Radien die Sollwertbahngeradenstücke gelegt, wodurch insbesondere rechentechnische Vereinfachungen erzielt werden.

Vorzugsweise werden nur zo viele ermittelte Punkte der Istbewegung durch Geradenstücke ersetzt, daß die senkrechten Abstände dieser Punkte von den Geradenstücken einen vorgegebenen Grenzwert nicht überschreiten.

Die rechnerische Ermittlung der Geradenstücke wird vereinfacht, wenn die Schnittpunkte der geraden Stücke zugleich Punkte der ermittelten Istbewegung sind. Dann fallen die Endpunkte der Geradenstücke in die Istbewegung und werden lediglich dazwischenliegende Bereiche der Istbewegung durch die Gerade ersetzt.

Bei einer Ausgestaltung wird für jeden Planetärumlauf die Istbewegung durch Geradenstücke ersetzt und erfolgt eine Sollwertbahnvorgabe für den folgenden Planetärumlauf durch Verschiebung der Geradenstücke. Hierdurch wird für jeden Planetärumlauf eine optimale Sollwertbahnvorgabe garantiert.

Vielfach reicht es jedoch aus, wenn nach einer vorgegebenen Anzahl von Planetärumläufen die Istbewegung durch Geradenstücke ersetzt wird und eine Sollwertbahnvorgabe für den folgenden Planetärumlauf durch Verschiebung der Geradenstücke erfolgt, wobei die Sollwertbahnvorgabe für die übrigen Planetärumläufe durch Erhöhung der Radien der Schnittpunkte der Sollwertbahngeradenstücke des zuvor erfolgten Planetärumlaufes um das gleiche vorgegebene Maß erfolgt. Diese vereinfachte Vorgehensweise trägt der Tatsache Rechnung, daß über eine begrenzte Anzahl von Planetärumläufen nur geringfügige geometrische Verzerrungen der Istbewegung auftreten.

Die Istbewegung kann jedoch auch durch Geradenstücke ersetzt werden und eine Sollwertbahnvorgabe für den folgenden Planetärumlauf durch Verschiebung der Geradenstücke erfolgen, wenn die Summe der unter bestimmten Planetärwinkeln ermittelten Abweichungen zwischen der Sollwertbahnvorgabe und der Istbewegung für einen Planetärumlauf einen vorgegebenen Grenzwert überschreitet, wobei die Sollwertbahnvorgabe für die übrigen Planetärumläufe durch Erhöhung der Radien der Schnittpunkte der Sollwertbahngeradenstücke der Sollwertbahnvorgabe des zuvor erfolgten Planetärumlaufes um das gleiche vorgegebene Maß erfolgt. Hierdurch wird erreicht, daß eine Sollwertbahnvorgabe auf der Grundlage der Istbewegung des letzten Planetärumlaufes dann erfolgt, wenn diese Istbewegung erhebliche Abweichungen von der vereinfachten Sollwertbahnvorgabe des letzten Planetärumlaufes aufweist.

Hierbei wird die Summe der Abweichungen zwischen der Sollwertbahnvorgabe und der Istbewegung für einen Planetärumlauf vorzugsweise an den Schnittpunkten der Sollwertbahngeradenstücke und den Schnittpunkten der Geradenstücke ermittelt.

Bei einer weiteren Ausgestaltung erfolgt für die nach Ersatz der Istbewegung des vorherigen Planetärumlaufes durch Geradenstücke stattfindenden Planetärumläufe eine Änderung der Sollwertbahnvorgabe gegenüber dem vorangegangenen Planetärumlauf nicht, wenn die Summe der Abweichungen zwischen der Sollwertbahnvorgabe und der Istbewegung für einen Planetärumlauf an den Schnittpunkten der Sollwertbahngeradenstücke und den Schnittpunkten der Geradenstücke einen vorgegebenen Grenzwert überschreitet, wobei für diesen Fall die gleiche Sollwertbahnvorgabe ohne Vergrößerung der Radien für den nachfolgenden Planetärumlauf gilt. Hierdurch wird die Einhaltung der Sollwertbahnvorgabe durch die Istbewegung gefördert.

Bei einer weiteren Ausgestaltung werden der ermittelten und durch Geradenstücke ersetzten Istbewegung zu Beginn einer ersten Bearbeitungsstufe geometrisch ähnliche Sollwertbahnvorgaben sowohl für diese als auch für alle nachfolgenden Bearbeitungsstufen bei gleicher Geometrie der Werkzeugelektrode beibehalten. Eine erste Bearbeitungsstufe erfolgt nach einer ausreichenden Anerodierphase und kann in einem Schruppen der Einsenkung bestehen. Weitere Bearbeitungsstufen erfolgen bei reduzierter Impulsleistung der elektrischen Entladungsvorgänge, wobei ein Vorschlichten bzw. Schlichten der Einsenkung erfolgt. Hierdurch wird der Tatsache Rechnung getragen, daß die Istbewegung der Werkzeugelektrode auf einer deren Querschnittsform ähnlichen Bahn erfolgt, die sich geometrisch während des gesamten Bearbeitungsvorgangs relativ geringfügig verändert. Bei diesem Verfahren ist die erste Sollwertbahnvorgabe der letzten Sollwertbahnvorgabe der gleichen Bearbeitungsstufe geometrisch eingeschrieben und ist die letzte Sollwertbahnvorgabe der Bearbeitungsstufe der ersten Sollwertbahnvorgabe der nächsten Bearbeitungsstufe ebenfalls geometrisch eingeschrieben.

Bei einer weiteren Ausgestaltung erfolgt ausgehend von der Istbewegung die Aufweitung der Sollwertbahnvorgabe für jeden Planetärumlauf möglichst gleichmäßig, wobei die Differenz zwischen minimalem und maximalem Abstand der Sollwertbahnvorgabe vom Planetärzentrum in möglichst engen Grenzen bleibt. Hierdurch wird die Istbewegung einer Kreisbahn angenähert, und werden beim Aufweiten auf eine kreisförmige endgültige Sollwertbahn auftretende Leerlaufbereiche und einhergehende Wirkungsgradverluste vermieden. Hierzu kann die Geschwindigkeit der Translationsbewegung abhängig vom jeweiligen aktuellen Auslenkradius vorgegeben werden, wobei geringe aktuelle Auslenkradien geringen Geschwindigkeiten entsprechen und umgekehrt. Durch die erhöhte Verweildauer der Werkzeugelektrode bei geringen aktuellen Auslenkradien erfolgt eine besonders abtragsintensive Bearbeitung. Es kann aber auch das jeweilige Aufweitmaß der Radien abhängig vom jeweiligen aktuellen Auslenkradius vorgegeben werden, wobei geringe aktuelle Auslenkradien hohen Zustellmaßen entsprechen und umgekehrt. Diese Maßnahme kann auch zugleich mit der Beeinflussung der Geschwindigkeit der Translationsbewegung vorgenommen werden. Hohe Zustellmaße sind gleichzusetzen mit einer optimalen Spaltweite des Erosionsspaltes, wobei abtragsintensive Normalentladungen erfolgen.

Bei einer weiteren Ausgestaltung erfolgt die Regelung der Spaltweite über dem Auslenkradius in an sich bekannter Weise in vornehmlich lateraler Richtung, so daß die Werkzeugelektrode zum Zwecke der Regelung nicht aus der Einsenkung herausgezogen werden muß. Die Regelung der Spaltweite über dem Auslenkradius kann aber auch in an sich bekannter Weise gleichzeitig in lateraler Richtung und in Richtung der Haupteinsenkbewegung, d.h. vertikal erfolgen, wodurch Fehlentladungen an beliebiger Stelle des Erosionsspaltes entgegengewirkt werden kann.

Bei einer weiteren Ausgestaltung ist vorgesehen, daß die endgültigen Sollwertbahnen für jede Bearbeitungsstufe bzw. Einsenktiefe Kreisbahnen mit vorgewähltem Maximalradius sind, die unabhängig von der Geometrie der Werkzeugelektrode beim Aufweiten der bereits vorhandenen Einsenkung zum Abtragen von Randzone und Oberflächenrauheit der jeweils vorangegangenen Bearbeitungsstufe das geringste Abtragvolumen bedingen.

Die endgültigen Sollwertbahnen für jede Bearbeitungsstufe bzw. Einsenktiefe können aber auch in einer von einer Kreisbahn abweichenden geometrischen Form mit vorgewählten Maximalabmessungen enden, insbesondere in einem Quadrat, Dreieck, anderen geschlossen Polygonzügen bzw. aneinandergereihten Kreissegmenten.

Zur Berücksichtigung der aktuellen Bahngeometrie und des aktuellen Prozeßverhaltens des jeweiligen Planetärumlaufs können hohe Geschwindigkeiten der Translationsbewegung bei großen Eingriffsflächen der Werkzeugelektrode und in Leerlaufbereichen vorgesehen werden. Hierdurch werden verbesserte Spülverhältnisse im Arbeitsmedium erreicht und Wirkungsgradverluste vermieden. Der aktuellen Bahngeometrie und dem aktuellen Prozeßverhalten kann aber auch Rechnung getragen werden, indem die Geschwindig keit der Translationsbewegung bei Eingriff der Eckenbereiche der Werkzeugelektrode gering ist. Hierdurch werden Reduzierungen der Spaltweite des Erosionsspaltes durch Überschwingen der Elektrode bei erforderlichen Richtungsänderungen vermieden. Schließlich kann die Geschwindigkeit der Translationsbewegung unter Messung und Verarbeitung der Zündverzögerungszeit der Einzelentladungen gesteuert werden.

Weitere Einzelheiten und Vorteile des Gegenstandes der Erfindung ergeben sich aus der nachfolgenden Beschreibung der zugehörigen Zeichnungen, in denen ein herkömmliches Verfahren zum Planetärerodieren und erfindungsgemäße Verfahren dargestellt worden sind. In den Zeichnungen zeigen:

Fig. 1 Werkzeugelektrode und Werkstück beim Planetärerodieren in perspektivischer Darstellung;

Fig. 2 endgültige Sollwertbahn und Istbewegung der Werkzeugelektrode beim herkömmlichen Planetärerodieren in einem Koordinatensystem dargestellt;

Fig. 3 Anteil der kurzen Zündverzögerungszeiten H1 über dem Planetärwinkel $\phi$ beim herkömmlichen Planetärerodieren in Diagrammdarstellung;

Fig. 4 Anteil der mittleren Zündverzögerungszeiten H2 über dem Planetärwinkel $\phi$ beim herkömmlichen Planetärerodieren in Diagrammdarstellung;

Fig. 5 Sollwertbahnvorgabe und Istbewegung beim erfindungsgemäßen Planetärerodieren in einem Koordinatensystem dargestellt;

Fig. 6 Anteil kurzer Zündverzögerungszeiten H1 über dem Planetärwinkel φ beim erfindungsgemäßen Planetärerodieren in Diagrammdarstellung;

Fig. 7 Anteil mittlerer Zündverzögerungszeiten H2 über den Planetärwinkel φ beim erfindungsgemäßen Planetärerodieren in Diagrammdarstellung;

Fig. 8 endgültige Sollwertbahn der Werkzeugelektrode in einem Koordinatensystem dargestellt;

Fig. 9 dieselbe Sollwertbahn in Winkelschritte Δφ zerlegt in einem Koordinatensystem dargestellt;

Fig. 10 Istbewegung der Werkzeugelektrode in dieselben Winkelschritte zerlegt in einem Koordinatensystem dargestellt;

Fig. 11 Sollwertbahnvorgabe für einen nachfolgenden Planetärumlauf derselben Werkzeugelektrode in einem Koordinatensystem dargestellt;

Fig. 12 Datenerfassung und Datenverarbeitung eines erfindungsgemäßen Verfahrens in einem Flußdiagramm dargestellt;

Fig. 13 Ersetzen der Istbewegung eines Planetärumlaufes der Werkzeugelektrode durch Geradenstücke in einem Koordinatensystem dargestellt;

Fig. 14 Anlage zur Durchführung eines erfindungsgemäßen Verfahrens in schematischer Darstellung.

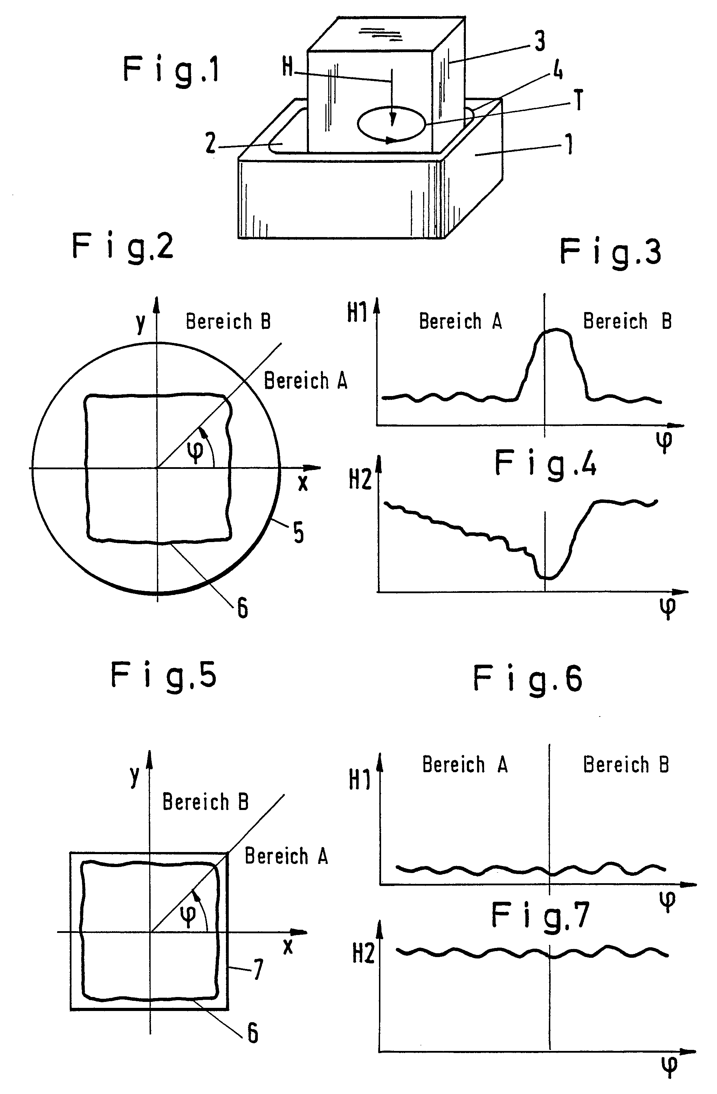

die Fig.1 zeigt ein Werkstück 1 mit einer Einsenkung 2, in die in Haupteinsenkrichtung H eine Werkzeugelektrode 3 eingesetzt ist. Üblicherweise ist das Werkstück 1 unbeweglich und wird ausschließlich die Werkzeugelektrode 3 bewegt. Hiervon wird nachfolgend ausgegangen, wenngleich es für die Durchführung des Verfahrens lediglich auf die erfindungsgemäße relative Bewegung zwischen Werkstück 1 und Werkzeugelektrode 3 ankommt. Die Werkzeugelektrode 3 führt innerhalb der Einsenkung 2 eine zyklische laterale Translationsbewegung T aus, die beispielsweise eine Kreisbewegung sein kann. Hierdurch ist die Spaltweite eines zwischen Werkstück 1 und Werkzeugelektrode ausgebildeten Erosionsspaltes 4 zeitlichen und örtlichen Schwankungen unterworfen. Abtragintensive Normalentladungen treten dort auf, wo die Spaltweite des Erosionsspaltes mittlere Werte aufweist.

Anhand der Fig.2 bis 4 werden nachfolgend die wichtigsten Überlegungen und beobachteten spezifischen Prozeßbedingungen erläutert, die zur Entwicklung des erfindungsgemäßen Verfahrens der Abstimmung der Sollwertbahnvorgabe auf die Istbewegung der Werkzeugelektrode geführt haben. Die Fig.2 zeigt eine endgültige Sollwertbahn 5 der Werkzeugelektrode 3 und deren Istbewegung 6 in einer Ebene senkrecht zur Haupteinsenkrichtung H. Dargestellt ist also die laterale Translationsbewegung der Werkzeugelektrode. Die Sollwertbahnvorgabe für jeden Planetärumlauf entspricht beim konventionellen Planetärerodieren stets der endgültigen Sollwertbahn 5, welche wiederum auf das zu erzeugende maximale Aufweitmaß der Einsenkung 2 abgestimmt ist. Wie dargestellt hat die endgültige Sollwertbahn 5 in der Regel die Geometrie einer Kreisbahn. Dabei erfolgt die Regelung des Radius der Planetärbewegung während des Planetärumlaufes allein aufgrund der sich einstellenden Verhältnisse im Erosionsspalt 4. Dabei kann der Radius sowohl durch eine Bewegung der Werkzeugelektrode 3 ausschließlich in radialer Richtung, als auch durch eine überlagerte Bewegung in der Haupteinsenkrichtung H geregelt werden. Im letztgenannten Fall bewegen sich die Volumenelemente der Werkzeugelektrode 3 auf einer Kegelmantelfläche. Bei dieser Vorgehensweise werden jedoch der jeweilige Querschnitt der Werkzeugelektrode 3 und die daraus resultierenden Eingriffsbedingungen nicht berücksichtigt.

Aufgrund der abzutragenden Volumenverhältnisse im Bereich der Ecken und Flächen der Einsenkung 2 bildet sich die Istbahn 6 der Werkzeugelektrode 3 nach einer ausreichend langen Anerodierphase geometrisch ähnlich dem eingesetzten Querschnitt der Werkzeugelektrode 3 aus. In diesem Fall ist die Istbahn 6 also annähernd quadratisch ausgebildet. Wenn die Istbahn 6 in den Eckenbereichen den Radius der endgültigen Sollwertbahn 5 erreicht, ist an diesen Stellen auch das maximale Aufweitmaß der Einsenkung 2 vorhanden, so daß diese Bereiche Leerlaufbereiche der Werkzeugelektrode 3 sind. Die Differenz zwischen der endgültigen Sollwertbahn 5 und der Istbewegung 6 schwankt periodisch über einen Planetärumlauf, d.h. sie hängt von dem jeweiligen Planetärwinkel φ ab. So nimmt diese Differenz vor dem Eckenbereich stetig ab, wodurch die Elektrode im Bereich A einen weniger starken "Drang" nach außen erfährt. Die Folge ist eine im Mittel zunehmende Spaltweite des Erosionsspaltes 4. Beim Übergang vom Bereich A in den Bereich B nimmt die Differenz zwischen endgültiger Sollwertbahn 5 und Istbewegung 6 dagegen schnell zu, wodurch die Elektrode weiter nach außen gezwungen wird, obwohl gemäß der Istbewegung 6 eine Reduzierung des Radius erfolgt. Daraus ergibt sich vornehmlich direkt nach dem Übergang vom Bereich A in den Bereich B eine im Mittel zu kleine Spaltweite des Erosionsspaltes 4.

Wie aus den Fig. 3 und 4 ersichtlich ist, wirken sich diese Tendenzen nachteilig auf das Prozeßverhalten aus. Der Anteil H1 der sehr kurzen Zündverzögerungszeiten, welche einen hohen Elektrodenverschleiß bedingen, bleiben unter Voraussetzung annähernd stabiler Prozeßbedingungen im Bereich A zunächst etwa annähernd konstant. Dabei nimmt der Anteil H2 der als erosionswirksam anzusehenden mittlere Zündverzögerungszeiten entsprechend der zunehmenden Spaltweite kontinuierlich ab. Im Übergang vom Bereich A in den Bereich B, in dem ein Richtungswechsel der Translationsbewegung der Werkzeugelektrode 3 erfolgt, steigt der Anteil H1 kurzer Zündverzögerungszeiten aufgrund der sich einstellenden geringen Spaltweite stark an. Erst mit fortschreitenden Planetärbewegungen nimmt der Anteil mittlerer Zündverzögerungszeiten H2 nach dem Absinken auf einen minimalen Wert wieder zu. Gleichzeitig stabilisiert sich der Anteil kurzer Zündverzögerungszeiten H1 auf einen geringen Wert. Dieser Vorgang wiederholt sich bei jedem Richtungswechsel der Werkzeugelektrode 2 und wirkt sich auf das Abtragverhalten, d.h. die Bearbeitungszeit und den Elektrodenverschleiß negativ aus.

Weitere Nachteile ergeben sich bei einer konstanten Winkelgeschwindigkeit der Translationsbewegung T der Werkzeugelektrode aus den Verhältnissen der Umfangsgeschwindigkeit der Translationsbewegung. Da die Umfangsgeschwindigkeit der Translationsbewegung in diesem Fall vom aktuellen Radius der Planetärbewegung abhängt, ergeben sich im Bereich der Seitenmitte der Werkzeugelektrode 3 kleinere Relativgeschwindigkeiten zwischen Werkzeugelektrode 3 und Werkstück 1. Im Bereich der Seitenmitte liegen aber gerade ungünstige Spülverhältnisse aufgrund großer Eingriffsflächen vor. In den Eckenbereichen dagegen ist die Umfangsgeschwindigkeit der Translationsbewegung T groß, so daß die zusätzliche Gefahr einer ungünstigen Verminderung der Spaltweite des Erosionsspaltes 4 durch ein Überschwingen der Werkzeugelektrode 3 besteht. Diese Tendenzen wirken sich zusätzlich negativ auf das Abtragverhalten aus.

Wie die Fig. 5 zeigt, erfolgt bei einem erfindungsgemäßen Verfahren eine Anpassung einer Sollwertbahnvorgabe 7 für die Translationsbewegung T jedes Planetärumlaufs an die Istbewegung 6 und somit letztlich an den Querschnitt der Werkzeugelektrode 3. Die Geometrie der Sollwertbahnvorgabe 7 ist also annähernd quadratisch. Wie die Fig. 6 und 7 zeigen, werden hierdurch die vorstehend beschriebenen Nachteile im wesentlichen überwunden, so daß ein Einfluß des Eckenüberganges vom Bereich A in den Bereich B auf das durch die Zündverzögerungszeiten H1 und H2 charakterisierte Prozeßverhalten nicht mehr erkennbar ist. Eine weitere Verbesserung des Arbeitsergebnisses kann erzielt werden, wenn zusätzlich die Geschwindigkeit der Translationsbewegung T den geometrischen Verhältnissen angepasst wird, d.h. wenn die Seitenfläche der Werkzeugelektrode 3 mit erhöhter Geschwindigkeit, die Eckenbereiche dagegen mit reduzierter Geschwindigkeit erodieren. Die Verbesserungen des Arbeitsergebnisses zeigen sich insbesondere in der erreichbaren Bearbeitungszeit, in Elektrodenverschleiß und in der erreichbaren Oberflächengüte.

Die Vorteile eines erfindungsgemäßen Verfahrens ergeben sich auch bei nicht rotationssymmetrischem Querschnitt der Werkzeugelektroden 3. Aufgrund der Vielfalt der möglichen Geometrien der Werkzeugelektroden 3 erscheint im praktischen Einsatz eine vorherige Programmierung der jeweiligen Sollwertbahnvorgaben weniger sinnvoll. zumal hierbei zufälligen Prozeßstörungen nicht Rechnung getragen wird. Dennoch erscheint es möglich, anhand eines vorweggenommenen Bearbeitungsvorganges die Istbewegung der Werkzeugelektrode 3 zu ermitteln und im Wege eines vorweggenommenen Lernprozesses die Sollwertbahnvorgabe für sämtliche Planetärumläufe nachfolgender Bearbeitungsvorgänge festzulegen. Die kann jedoch nur für jeweils eine Geometrie der Werkzeugelektrode 3 und ein vorgegebenes Bearbeitungsergebnis erfolgen.

Besonders vorteilhaft ist es, wenn beim Aufweiten einer bereits vorhandenen Einsenkung auf ein bestimmtes maximales Aufweitmaß zum Abtragen der wärmebeeinflußten Randzone und der Oberflächenrauheit der vorangegangenen Bearbeitungsstufen die endgültige Sollwertbahn 5 eine Kreisbahn ist, weil hierbei das geringste erforderliche Abtragvolumen gegeben ist. Aufgrund dieser Überlegungen wird vorzugsweise die Sollwertbahnvorgabe 7 aufgrund kontinuierlicher Messungen der Istbewegung 6 der Werkzeugelektrode 3 während des Bearbeitungsvorganges ermittelt.

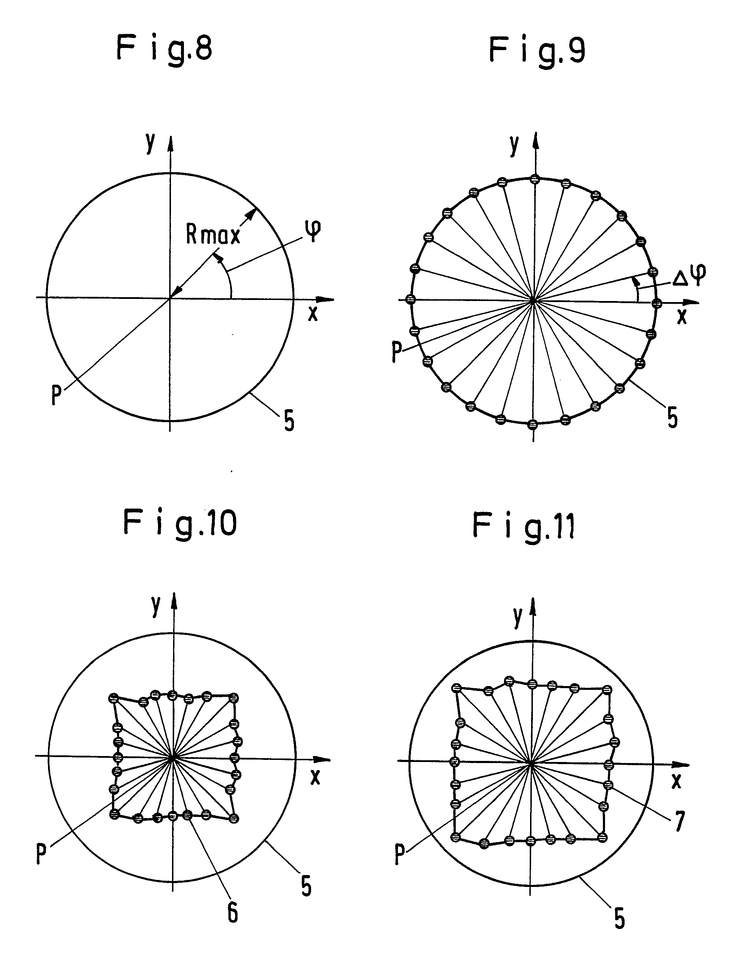

Für die kontinuierliche Messung der Istbewegung 6 wird zunächst die in der Fig. 8 dargestellte endgültige Sollwertbahn 5 mit dem Radius $R_{max}$ gemäß Fig. 9 in Winkelschritte $\Delta\phi$ zerlegt. Der Ursprung des Koordinatensystems der Fig. 8 bis 11 ist gleichzeitig das Planetärzentrum P der Planetärbewegung. Die endgültige Sollwertbahn 5 kann bei einem erfindungsgemäßen Verfahren auch von einer Kreisbahn abweichen. Die Ausgabe der Sollwertbahnvorgabe 7 erfolgt in Teilstücken entsprechend dieser Winkelschritte $\Delta\phi$.

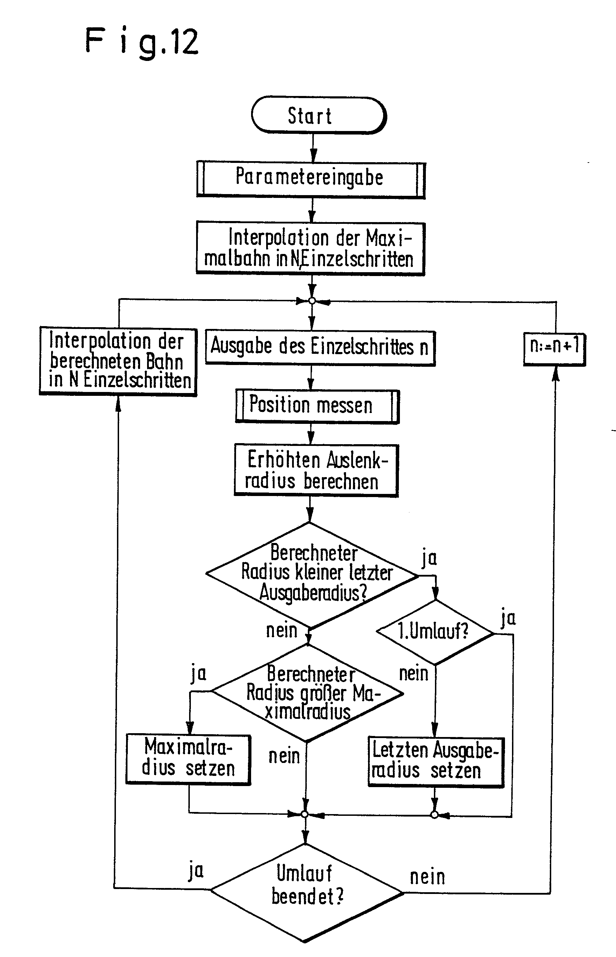

Wie in der Fig. 10 dargestellt ist, wird hierzu für jeden Planetärumlauf der Werkzeugelektrode 3 nach Ausführung der einzelnen Teilstücke die wirkliche Position der Istbewegung 6 gemessen. Wie in der Fig. 11 dargestellt ist, werden die gemessenen Positionen der Istbewegung 6 für die Ermittlung der Sollwertbahnvorgabe 7 des nachfolgenden Planetärumlaufes herangezogen, indem die gemessenen Radien für die jeweiligen Winkelschritte um ein vorgegebenes Maß erhöht werden. Dieser Ablauf wird wiederholt, bis der gewünschte Maximalradius der endgültigen Sollwertbahn 5 erreicht ist. Damit ist eine nur geringfügige Differenz zwischen Sollwertbahnvorgabe 7 und Istbewegung 6 der Werkzeugelektrode 3 bei jedem Planetärumlauf gewährleistet. Die weiterhin erforderlichen Regelbewegungen zur Konstanthaltung der Spaltweite des Erosionsspaltes 4 erfolgen in der bereits beschriebenen Weise.

Dasselbe Verfahren ist in der Fig. 12 nochmals in Form eines Flußdiagrammes dargestellt, welches der Steuerung durch einen Prozeßrechner zugrundegelegt werden kann. Nach dem Start des Verfahrens ist eine Parametereingabe erforderlich, welche insbesondere die endgültige Sollwertbahn betrifft. Entsprechend der anhand der Fig. 8 und 9 dargestellten Vorgehensweise wird sodann die endgültige Sollwertbahn in N Einzelschritte zerlegt.

Daraufhin wird der erste Einzelschritt als Sollwertbahnvorgabe für die Werkzeugelektrode ausgegeben. Die erreichte Position der Istbewegung wird anschließend gemessen und für die Berechnung des erhöhten Radius der Sollwertbahnvorgabe für den nachfolgenden Planetärumlauf unter dem gleichen Planetärwinkel herangezogen.

Wie durch die erste Entscheidungsraute angedeutet ist, wird eine Verringerung des Radius gegenüber der Sollwertbahnvorgabe des vorangegangenen Planetärumlaufs unterbunden, indem nochmals der zuletzt ausgegebene Radius der Sollwertbahnvorgabe gesetzt wird. Hierdurch bleiben kurzfristige Prozeßstörungen, die einen Rückzug der Werkzeugelektrode in Richtung des Planetärzentrums über die Regelung der Spaltweite des Erosionsspaltes bewirken bei der Sollwertbahnvorgabe des nächsten Planetärumlaufes unberücksichtigt. Lediglich beim ersten Planetärumlauf wird derartigen Prozeßstörungen Rechnung getragen.

Ist jedoch der berechnete Radius größer als der zuletzt ausgegebene Radius der Sollwertbahnvorgabe, so wird letzterer durch den ersteren ersetzt, falls nicht der Maximalradius überschritten wird. In diesem Falle wird der Maximalradius der endgültigen Sollwertbahn als auszugebender Radius der Sollwertbahnvorgabe für den nächsten Planetärumlauf gesetzt.

Falls der Planetärumlauf noch nicht beendet ist, wird der nächste Einzelschritt n ausgegeben und wiederholen sich die beschriebenen Vorgänge der Messungen der Istbewegung und der Berechnung des Wertes der Sollwertbahnvorgabe für den nachfolgenden Planetärumlauf.

Wenn jedoch ein vollständiger Planetärumlauf beendet ist, kann erneut eine Interpolation der berechneten Sollwertbahnvorgabe in N Einzelschritten erfolgen, um diese Sollwertbahnvorgabe einem weiteren Planetärumlauf zugrundezulegen.

Nach diesem Schema wird solange verfahren, bis sämtliche gemessenen Positionen der Istbewegung den Maximalradius der endgültigen Sollwertbahn erreicht haben. Dann ist die Einsenkung in der gewünschten Weise aufgeweitet und der Bearbeitungsvorgang abgeschlossen.

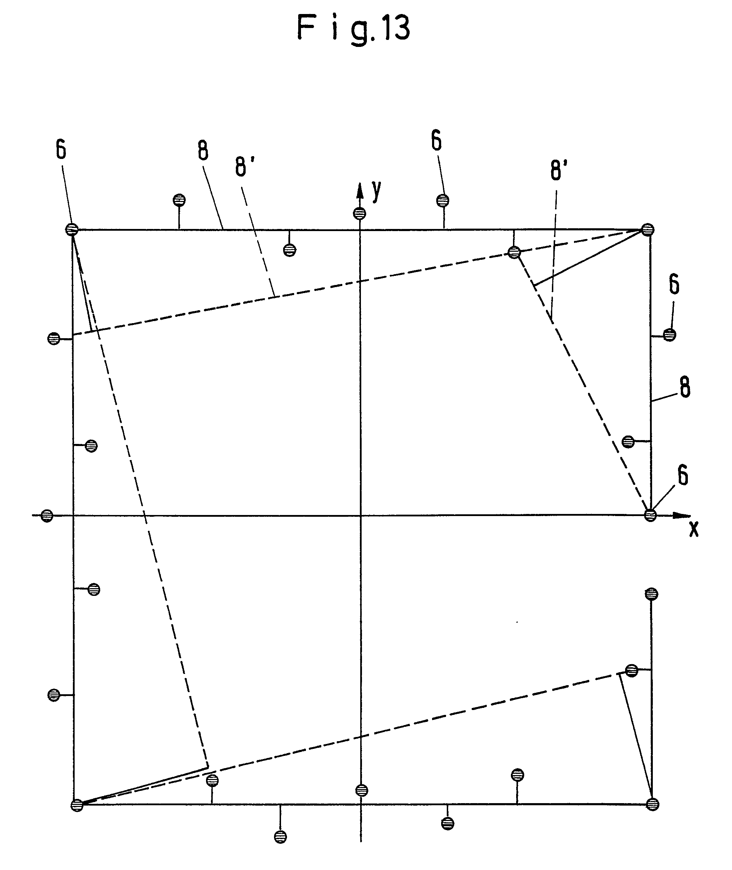

Die aufgenommenen Punkte der Istbewegung 6 können gemäß Fig. 13 für die Sollwertbahnvorgabe weiterverarbeitet werden. Dabei wird die Istbewegung 6 in längere Geradenstücke 8 zerlegt, deren Richtung annähernd parallel zur jeweiligen Seitenfläche der Werkzeugelektrode verläuft. Damit ist eine weitere Prozeßberuhigung zu erreichen, da trotz Annäherung der Sollwertbahnvorgabe an die Istbewegung 6 eine Übertragung von Regelbewegungen auf die berechnete Sollwertbahnvorgabe weitgehend unterdrückt wird. Eine alleinige Vergrößerung der Winkelschritte bei der Meßwertaufnahme ist jedoch keine sinnvolle Maßnahme, die Anzahl der Geradenstücke 8 unter Einhaltung der geforderten Genauigkeit zu reduzieren. Die Eckenübergänge der Istbewegung 6 können nämlich dann nicht eindeutig identifiziert werden.

Nach der erfindungsgemäßen Vorgehensweise wird vom ersten Meßpunkt der Istbewegung 6 auf der positiven x-Achse des Koordinatensystems eine Gerade zum dritten Meßpunkt gezogen. Ist der senkrechte Abstand des dazwischenliegenden Meßpunktes von der Geraden kleiner als ein vorzugebender Grenzwert, wird die Gerade vom ersten zum vierten Meßpunkt gezogen und wiederum der Abstand aller dazwischenliegenden Meßpunkte bestimmt. Dies wird solange fortgeführt, bis einer der Punktabstände den vorgegebenen Grenzwert überschreitet. Dies ist bei dem Geradenstück 8' der Fall, weil von diesem der dritte Meßpunkt einen den Grenzwert überschreitenden Abstand aufweist. Der vorletzte Meßpunkt bildet dann den Endpunkt des Geradenstückes 8 und die Geradenbildung beginnt mit diesem Meßpunkt von vorn, bis der gesamte Planetärumlauf abgeschlossen ist.

Die Zerlegung der Istbewegung 6 in längere Geradenstücke kann dann entweder nach verschiedenen Kriterien im Laufe der Bearbeitung wiederholt werden, oder aber ausgehend von der Istbewegung 6 zu Beginn der ersten Bearbeitungsstufe, d.h. nach ausreichend langer Anerodierphase, für alle nachfolgenden Bearbeitungsstufen zum weiteren Schlichten der Werkstückoberfläche beibehalten werden. Dabei wird genutzt, daß sich die Geometrie der Werkzeugelektrode in aller Regel nicht ändert und damit auch die abzutragenden Volumenverhältnisse bei einem Planetärumlauf im wesentlichen gleich bleiben.

Die Aufweitung der Sollwertbahnvorgabe erfolgt dann durch Erhöhen der Radien der Schnittpunkte der Geradenstücke um ein abhängig von der zu erwartenden Abtragrate vorgegebenes Maß unter Beibehaltung des jeweiligen Planetärwinkels. Durch die erhöhten Radien werden dann die Sollwertbahngeradenstücke gelegt aus denen sich die Sollwertbahnvorgabe zusammensetzt.

Dabei wird die Radienerhöhung nur dann vorgenommen, wenn die Summe der Abweichungen zwischen Sollwertbahnvorgabe und Istbewegung für eine Planetärumlauf zwischen den Schnittpunkten der Geradenstücke und der Sollwertbahngeradenstücke kleiner als ein vorzugebender Grenzwert ist. Andernfalls wird die gleiche Sollwertbahnvorgabe ohne Vergrößerung des Radius nochmals ausgeführt, um eine ständig steigende Abweichung zwischen Sollwertbahnvorgabe und Istbewegung zu vermeiden.

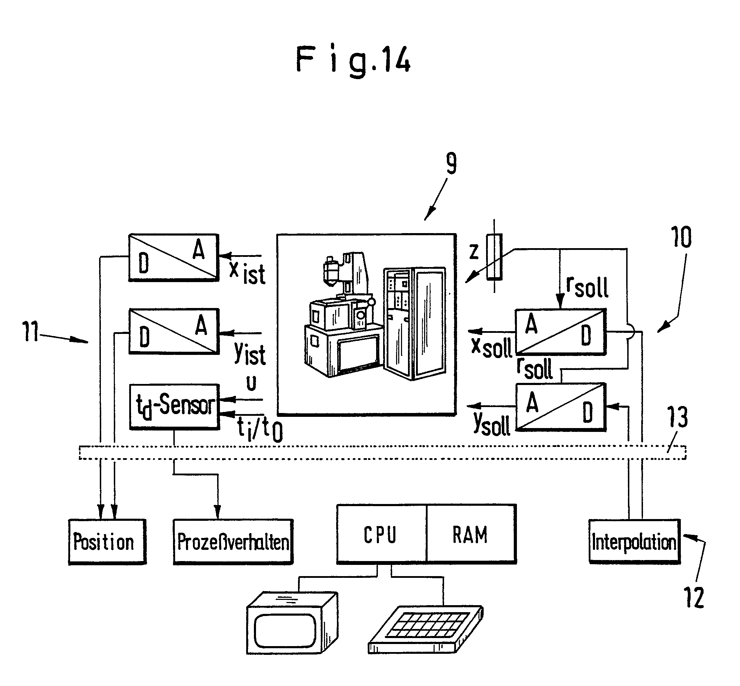

Die in der Fig. 14 dargestellte Anlage zur Durchführung eines erfindungsgemäßen Verfahrens hat eine Erodiermaschine 9, die über Eingabe-Schnittstellen 10 und Meß-Schnittstellen 11 mit einem Prozeßrechner 12 verbunden sind. Zur Galvanischen Trennung der Schnittstellen 10,11 von dem Prozeßrechner 12 sind Lichtwellenleiter 13 vorgesehen.

Die interpolierten Werte der Sollwertbahnvorgabe werden über als Eingabe-Schnittstellen dienende Digital-Analog-Wandler in die Erodiermaschine 9 eingespeist. Die Istbewegung wird über als Meß-Schnittstellen dienende Analog-Digital-Wandler an den Prozeßrechner 12 weitergeleitet. Zur Information über das Prozeßverhalten erhält der Prozeßrechner 12 außerdem die Werte der Impulsparameter, wozu ein eine weitere Meß-Schnittstelle 11 bildender $T_d$-Sensor vorgesehen ist.

## Bezugszeichenliste

1 Werkstück
2 Einsenkung
3 Werkzeugelektrode
4 Erosionsspalt
5 Sollwertbahn (endgültige)
6 Istbewegung
7 Sollwertbahnvorgabe
8,8' Geradenstück
9 Erodiermaschine
10 Eingabe-Schnittstellen
12 Prozeßrechner
13 Lichtwellenleiter
H Haupteinsenkrichtung
H1 Anteil kurzer Zündverzögerungszeiten
H2 Anteil mittlerer Zündverzögerungszeiten
ist Istwert
P Planetärzentrum
r Radius
$R_{max}$ Radius der endgültigen Sollwertbahn
soll Sollwert
T Translationsbewegung

x,y,z Koordinaten $\Delta\phi$ Winkelschritte $\phi$ Planetärwinkel

## Ansprüche

1. Bearbeitungsverfahren zum Planetärerodieren vorhandener Einsenkungen, bei dem für eine Schlichtbearbeitung eine relative zyklische laterale Translationsbewegung zwischen Werkzeugelektrode (3) und Werkstück (1) ausgeführt wird, wobei unter Vorgabe einer endgültigen Sollwertbahn (5) die Istbewegung (6) durch Regelung der Spaltweite über dem Auslenkradius erfolgt.
**dadurch gekennzeichnet,**
daß die Sollwertbahnvorgabe (7) für jeden Planetärumlauf unter Ermittlung der Istbewegung (6) mindestens eines vorangegangenen Planetärumlaufs und unter Vorgabe einer einen optimalen Prozeßablauf ergebenden Soll-Istwert-Differenz bestimmt wird, wobei jede Sollwertbahnvorgabe (7) durch die endgültige Sollwertbahn (5) begrenzt ist.

2. Verfahren nach Anspruch 1, dadurch gekennzeichnet, daß die Radien der Istbewegung (6) in vorgewählten Winkelschritten ($\Delta\phi$) um ein Planetärzentrum (P) ermittelt werden.

3. Verfahren nach Anspruch 2, dadurch gekennzeichnet, daß jeder ermittelte Radius der Istbewegung (6) für die Sollwertbahnvorgabe (7) eines nachfolgenden Planetärumlaufs um eine Soll-Istwert-Differenz vergrößert wird, die abhängig von der zu erwartenden Abtragrate vorgegeben wird, bis ein in der endgültigen Sollwertbahn (5) endender Maximalradius erreicht wird.

4. Verfahren nach Anspruch 3, dadurch gekennzeichnet, daß jeder Radius der Sollwertbahnvorgabe (7) mindestens so groß ist, wie der Radius der Sollwertbahnvorgabe (7) des vorangegangenen Planetärumlaufs unter dem gleichen Planetärwinkel ($\phi$).

5. Verfahren nach einem der Ansprüche 3 bis 4, dadurch gekennzeichnet, daß eine Änderung der Sollwertbahnvorgabe (7) gegenüber dem vorangegangenen Planetärumlauf nicht erfogt, wenn die Summe der unter bestimmten Planetärwinkeln ($\phi$) ermittelten Abweichungen zwischen der Sollwertbahnvorgabe (7) und der Istbewegung (6) für einen Planetärumlauf einen vorgegebenen Grenzwert überschreitet, wobei für diesen Fall die gleiche Sollwertbahnvorgabe (7) ohne Vergrößerung der Radien für den nachfolgenden Planetärumlauf gilt.

6. Verfahren nach einem der Ansprüche 1 bis 5, dadurch gekennzeichnet, daß die ermittelte Istbewegung (6) eines Planetärumlaufs durch Geradenstücke (8) ersetzt wird und daß zur Sollwertbahnvorgabe (7) Sollwertbahngeradenstücke durch Verschiebung der Geradenstücke (8) bestimmt werden.

7. Verfahren nach Anspruch 6, dadurch gekennzeichnet, daß zur Sollwertbahnvorgabe (7) die Radien der Schnittpunkte der Geradenstücke (8) unter Beibehaltung des jeweiligen Planetärwinkels (φ) um ein vorgegebenes Maß vergrößert werden und daß durch die Endpunkte der vergrößerten Radien die Sollwertbahngeradenstücke gelegt werden.

8. Verfahren nach einem der Ansprüche 6 bis 7, dadurch gekennzeichnet, daß die senkrechten Abstände der durch die Geradenstücke (8) ersetzten Istbewegung (6) von diesen Geradenstücken (8) einen vorgegebenen Grenzwert nicht überschreiten.

9. Verfahren nach einem der Ansprüche 6 bis 8, dadurch gekennzeichnet, daß die Schnittpunkte der Geradenstücke (8) zugleich Punkte der ermittelten Istbewegung (6) sind.

10. Verfahren nach einem der Ansprüche 6 bis 9, dadurch gekennzeichnet, daß für jeden Planetärumlauf die Istbewegung (6) durch Geradenstücke ersetzt wird und eine Sollwertbahnvorgabe (7) für den folgenden Planetärumlauf durch Verschiebung der Geradenstücke (8) erfolgt.

11. Verfahren nach einem der Ansprüche 6 bis 9, dadurch gekennzeichnet, daß nach einer vorgegebenen Anzahl von Planetärumläufen die Istbewegung (6) durch Geradenstücke (8) ersetzt wird und eine Sollwertbahnvorgabe (7) für den folgenden Planetärumlauf durch Verschiebung der Geradenstücke (8) erfolgt und daß die Sollwertbahnvorgabe (7) für die übrigen Planetärumläufe durch Erhöhung der Radien der Schnittpunkte der Sollwertbahngeradenstücke der Sollwertbahnvorgabe (7) des zuvor erfolgten Planetärumlaufes um das gleiche vorgegebene Maß erfolgt.

12. Verfahren nach einem der Ansprüche 6 bis 9, dadurch gekennzeichnet, daß die Istbewegung (6) durch Geradenstücke (8) ersetzt wird und eine Sollwertbahnvorgabe (7) für den folgenden Planetärumlauf durch Verschiebung der Geradenstücke (8) erfolgt, wenn die Summe der unter bestimmten Planetärwinkeln (φ) ermittelten Abweichungen zwischen der Sollwertbahnvorgabe (7) und der Istbewegung (6) für einen Planetärumlauf einen vorgegebenen Grenzwert überschreitet und daß die Sollwertbahnvorgabe (7) für die übrigen Planetärumläufe durch Erhöhung der Radien der Schnittpunkte der Sollwertbahngeradenstücke der Sollwertbahnvorgabe (7) des zuvor erfolgten Planetärumlaufes um das gleiche vorgegebene Maß erfolgt.

13. Verfahren nach Anspruch 12, dadurch gekennzeichnet, daß die Summe der Abweichungen zwischen der Sollwertbahnvorgabe (7) und der Istbewegung (6) für einen Planetärumlauf an den Schnittpunkten der Sollwertbahngeradenstücke und den Schnittpunkten der Geradenstücke (8) ermittelt wird.

14. Verfahren nach Anspruch 5 in Verbindung mit einem der Ansprüche 6 bis 12, dadurch gekennzeichnet, daß für die nach Ersatz der Istbewegung (6) des vorherigen Planetärumlaufs durch Geradenstücke (8) stattfindenden Planetärumläufe eine Änderung der Sollwertbahnvorgabe (7) gegenüber dem vorangegangenen Planetärumlauf nicht erfolgt, wenn die Summe der Abweichungen der Sollwertbahnvorgabe (7) und der Istbewegung (6) für einen Planetärumlauf an den Schnittpunkten der Sollwertbahngeradenstücke und den Schnittpunkten der Geradenstücke (8) einen vorgegebenen Grenzwert überschreitet, wobei für diesen Fall die gleiche Sollwertbahnvorgabe (7) ohne Vergrößerung der Radien für den nachfolgenden Planetärumlauf gilt.

15. Verfahren nach einem der Ansprüche 6 bis 9, dadurch gekennzeichnet, daß der ermittelten und durch Geradenstücke (8) ersetzten Istbewegung (6) zu Beginn einer ersten Bearbeitungsstufe geometrisch ähnliche Sollwertbahnvorgaben (7) sowohl für diese als auch für alle nachfolgenden Bearbeitungsstufen bei gleicher Geometrie der Werkzeugelektrode (3) beibehalten werden.

16. Verfahren nach einem der Ansprüche 1 bis 14, dadurch gekennzeichnet, daß ausgehend von der Istbewegung (6) die Aufweitung der Sollwertbahnvorgabe (7) für jeden Planetärumlauf möglichst gleichmäßig erfolgt, wobei die Differenz zwischen minimalen und maximalem Abstand der Sollwertbahnvorgabe (7) vom Planetärzentrum (P) in möglichst engen Grenzen bleibt.

17. Verfahren nach Anspruch 16, dadurch gekennzeichnet, daß die Geschwindigkeit der Translationsbewegung (T) abhängig vom jeweiligen aktuellen Auslenkradius vorgegeben wird, wobei geringe aktuelle Auslenkradien geringen Geschwindigkeiten entsprechen und umgekehrt.

18. Verfahren nach einem der Ansprüche 16 bis 17, dadurch gekennzeichnet, daß das jeweilige Aufweitmaß der Radien abhängig vom jeweiligen aktuellen Auslenkradius vorgegeben wird, wobei geringe aktuelle Auslenkradien hohen Zustellmaßen entsprechen und umgekehrt.

19. Verfahren nach einem der Ansprüche 1 bis 18, dadurch gekennzeichnet, daß die Regelung der Spaltweite über dem Auslenkradius in an sich bekannter Weise in vornehmlich lateraler Richtung erfolgt.

20. Verfahren nach einem der Ansprüche 1 bis 18, dadurch gekennzeichnet, daß die Regelung der Spaltweite über dem Auslenkradius in an sich bekannter Weise gleichzeitig in lateraler Richtung und in Richtung der Haupteinsenkbewegung (H) erfolgt.

21. Verfahren nach einem der Ansprüche 1 bis 20, dadurch gekennzeichnet, daß die endgültigen Sollwertbahnen (5) für jede Bearbeitungsstufe bzw. Einsenktiefe Kreisbahnen mit vorgewähltem Maximalradius sind, die unabhängig von der Geometrie der Werkzeugelektrode (3) beim Aufweiten der bereits vorhandenen Einsenkung zum Abtragen von Randzone und Oberflächenrauheit der jeweils vorangegangenen Bearbeitungsstufe das geringste Abtragvolumen bedingen.

22. Verfahren nach einem der Ansprüche 1 bis 20, dadurch gekennzeichnet, daß die endgültigen Sollwertbahnen (5) für jede Bearbeitungsstufe bzw. Einsenktiefe in einer von einer Kreisbahn abweichenden geometrischen Form mit vorgewählten Maximalabmessungen enden, insbesondere in einem Quadrat, Dreieck, anderen geschlossenen Polygonzügen bzw. aneinandergereihten Kreissegmenten.

23. Verfahren nach einem der Ansprüche 1 bis 22, dadurch gekennzeichnet, daß die Geschwindigkeit der Translationsbewegung beim Eingriff der großen Eingriffsflächen der Werkzeugelektrode (3) und in Leerlaufbereichen hoch ist.

24. Verfahren nach einem der Ansprüche 1 bis 23, dadurch gekennzeichnet, daß die Geschwindigkeit der Translationsbewegung bei Eingriff der Eckenbereiche der Werkzeugelektrode (3) gering ist.

25. Verfahren nach einem der Ansprüche 23 bis 24, dadurch gekennzeichnet, daß die Geschwindigkeit der Translationsbewegung unter Messung und Verarbeitung der Zündverzögerungszeit der Einzelentladungen gesteuert wird.

Fig.1

Fig.2

Fig.3

Fig.4

Fig.5

Fig.6

Fig.7

# Fig.8

# Fig.9

# Fig.10

# Fig.11

# F i g.12

```
                    ┌─────────────┐
                    │    Start    │
                    └──────┬──────┘
                           │
              ┌────────────▼─────────────┐
              ║     Parametereingabe     ║
              └────────────┬─────────────┘
                           │
              ┌────────────▼─────────────┐
              │  Interpolation der Maxi- │
              │ malbahn in N Einzelschritten │
              └────────────┬─────────────┘
                           │
         ┌─────────────────●────────────────────┐
         │                 │                    │
┌────────▼────────┐ ┌──────▼──────────────┐  ┌──▼─────┐
│ Interpolation der│ │ Ausgabe des Einzelschrittes n│  │ n:=n+1 │
│ berechneten Bahn │ └──────┬──────────────┘  └────────┘
│ in N Einzelschritten│     │
└─────────────────┘ ┌───────▼────────┐
                    ║ Position messen ║
                    └───────┬────────┘
                    ┌───────▼────────┐
                    │ Erhöhten Auslenk-│
                    │ radius berechnen │
                    └───────┬────────┘
```

Interpolation der berechneten Bahn in N Einzelschritten

Ausgabe des Einzelschrittes n

n:=n+1

Position messen

Erhöhten Auslenk-radius berechnen

Berechneter Radius kleiner letzter Ausgaberadius?  —ja

nein

Berechneter Radius größer Ma-ximalradius  —ja

1.Umlauf?  —ja

nein

Maximalra-dius setzen

nein

Letzten Ausgabe-radius setzen

Umlauf beendet?  —nein

ja

# Fig.13

# F i g.14

Europäisches
Patentamt

**EUROPÄISCHER RECHERCHENBERICHT**

Nummer der Anmeldung

EP 89107243.1

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | DE - B - 1 690 763 <br> (LA SOUDURE) <br> * Ansprüche; Fig. 1-3a * <br> -- | 1 | B 23 H 7/28 |
| A | DE - A1 - 2 550 649 <br> (ATELIERS DES CHARMILLES) <br> * Ansprüche; Fig. 1-3 * <br> ---- | 1 | |

| RECHERCHIERTE SACHGEBIETE (Int. Cl.4) |
|---|
| B 23 H 1/00 <br> B 23 H 7/00 |

Der vorliegende Recherchenbericht wurde für alle Patentansprüche erstellt.

| Recherchenort | Abschlußdatum der Recherche | Prüfer |
|---|---|---|
| WIEN | 13-07-1989 | TSILIDIS |